# EUROPEAN PATENT SPECIFICATION

(11) **EP 2 433 805 B1**
(45) Date of publication and mention of the grant of the patent: **23.04.2014**
(21) Application number: 10181471.3
(22) Date of filing: 28.09.2010
(51) Int. Cl.: B41J 3/36, B41J 3/46, G06F 1/16, B41J 3/39, B41J 3/407, H04M 1/21, H04M 1/725

(54) **Portable electronic device and method of controlling the electronic device to output information**
Tragbare elektronische Vorrichtung und Verfahren zur Steuerung der elektronischen Vorrichtung zur Ausgabe von Information
Dispositif électronique portable et son procédé de commande pour la fourniture d'informations

(43) Date of publication of application: 28.03.2012
(73) Proprietor: BlackBerry Limited, Waterloo, ON N2K 0A7 (CA)
(72) Inventor: Griffin, Jason Tyler, Waterloo Ontario N2L 3W8 (CA); Gaggero, Clara, London, Greater London E1 7LF (GB)
(74) Representative: Fennell, Gareth Charles

(56) References cited:
- EP-A1- 1 857 281
- EP-A2- 2 172 836
- WO-A1-00/74941
- WO-A1-01/94118
- WO-A1-97/17206
- WO-A1-03/033270
- WO-A1-2008/150928
- GB-A- 2 343 657
- US-A- 5 988 900
- US-A1- 2002 183 088
- US-A1- 2007 049 832
- US-A1- 2008 057 941
- US-A1- 2008 296 391
- US-A1- 2010 110 018
- US-B1- 6 312 124
- US-B1- 6 991 332

## Description

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions (see EP 2 172 836). Portable electronic devices include several types of devices including mobile stations such as simple cellular telephones, smart telephones, wireless PDAs, and laptop computers with wireless 702.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. Improvements in devices with touch-sensitive displays are desirable.

### GENERAL

A portable electronic device includes a device configured to detect an event, a marker configured to mark a surface that is separate from the portable electronic device by temporarily indenting the surface wherein the marker comprises a rotary element, and at least one actuator arranged to rotate the rotary element to apply the mark in response to the event. A method includes detecting an event on a device of a portable electronic device, determining a response to the event, and actuating one or more actuators to configure a marker to apply a mark to a surface that is separate from the portable electronic device based on the response by temporarily indenting the surface, wherein the marker comprises a rotary element, and the one or more actuators are arranged to rotate the rotary element.

### BRIEF DESCRIPTION OF THE DRAWINGS

FIG. 1 is a block diagram of a portable electronic device in accordance with the present disclosure.
FIG. 2 is a front view of an example of a portable electronic device including a marker in accordance with the disclosure.
FIG. 3 is a partial cross-section of an actuator and marker of the portable electronic device in accordance with the disclosure.
FIG. 4 is a flowchart illustrating a method of controlling the electronic device output information in accordance with the disclosure.
FIG. 5 illustrates a portable electronic device including a marker and a user touching the marker in accordance with the disclosure.
FIG. 6 illustrates a mark on a thumb of a user in accordance with the disclosure.
FIG. 7 is a view of another example of a portable electronic in accordance with the disclosure.
FIG. 8 a front view of another example of a portable electronic in accordance with the disclosure.

### DETAILED DESCRIPTION

The following describes an electronic device that includes a device configured to detect an event, a marker configured to mark a surface that is separate from the portable electronic device, and at least one actuator arranged to configure the marker to apply the mark in response to the event. A method includes detecting an event, determining a response to the event, and actuating one or more actuators to configure a marker to apply a mark based on the response.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

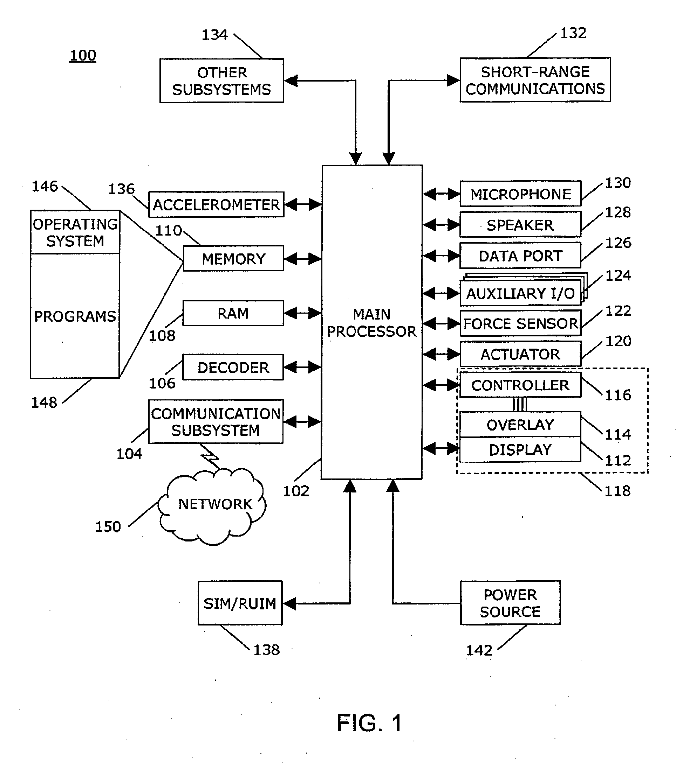

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack which may include, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. The controller 116 and/or the processor 102 may detect a touch by any suitable contact member on the touch-sensitive display 118. Multiple simultaneous touches may be detected.

One or more gestures may also be detected by the touch-sensitive display 118. A gesture, such as a swipe, also known as a flick, is a type of touch that begins at an origin point and continues to a finishing point on the touch-sensitive display 118. A gesture may be identified by attributes of the gesture, including the start, point, the end point, the distance travelled, the duration, and the direction, for example. A gesture may be long or short in distance and/or duration. Two points of the gesture may be utilized to determine a direction of the gesture.

An optional force sensor 122 or force sensors may be disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

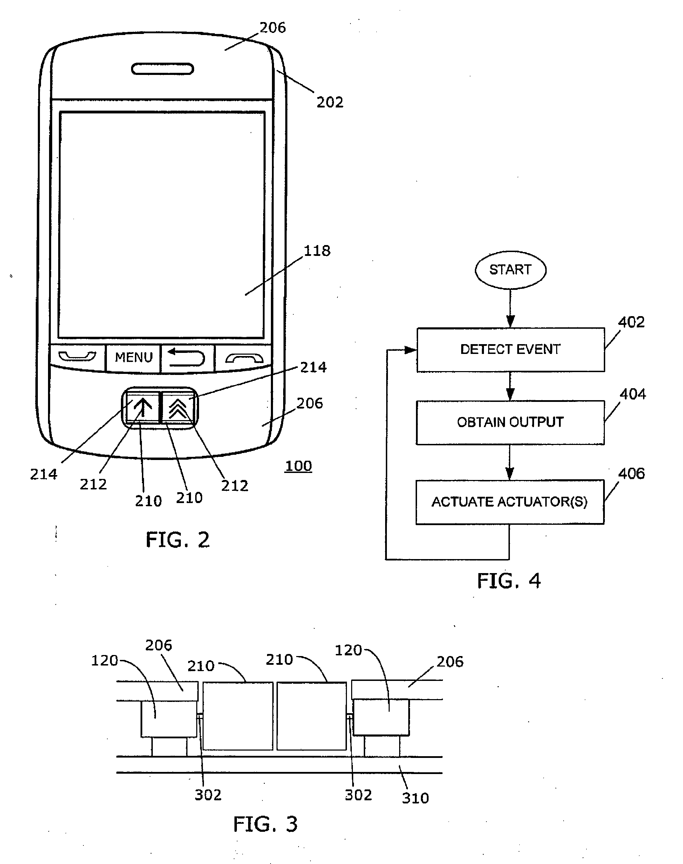

Views of an example of the portable electronic device 100 are shown in FIG. 2 and FIG. 3. The portable electronic device 100 includes a housing 202 that encloses components such as shown in FIG. 1. The housing 202 may include a back 204, sidewalls (not shown), and a front 206 of the housing. The front 206 of the housing includes openings through which the touch-sensitive display 118 and the markers 210 are accessible. The markers 210 may be accessible anywhere along any part of the housing 202.

A partial cross section of the portable electronic device 100 through the center of the actuators 120 and the markers 210 is shown in FIG. 3. In this example, two actuators 120 are utilized to position two markers 210 to mark a surface that is separate from the portable electronic device 100. The surface may be a part of a person, such as a finger or other part of a hand, or an inanimate object, such as a glove, piece of paper, plastic, or other impressionable material, or other suitable object. The actuators 120 position the markers 210 in response to an event at the portable electronic device. The actuators 120 may be, for example, miniature stepper motors that are utilized to guide or index the markers 210 to a position to output information based on the event. The actuator(s) 120 are not limited to miniature stepper motors and any suitable actuators may be utilized. The actuator or actuators utilized are advantageously selected to operate with the marker.

The markers 210 may be any suitable device for marking a surface. In the example illustrated in FIG. 2 and FIG. 3, the markers 210 are rotatable cubes or cylinders with rounded edges. The markers 210 are rotatable, for example, on an axle 302 extending from the actuators 120. Each marker 210 may be rotated into any one of multiple positions such that any of a plurality of marking elements 212 is accessible, e.g., through the opening in the front 206 of the housing 202. The marking elements 212, which provide information in the form of symbols and/or characters, protrude from the markers 210. In the example where the marker 210 is a cube, each of four faces 214 of the cube may include a marking element 212 that protrudes from the face. Each face 214 may include a single protruding marking element 212 or may include multiple protruding marking elements 212 to output information to the user.

The marking elements may be associated with a single application on the portable electronic device 100 or may be associated and utilized with multiple applications on the electronic device 100. For the purpose of the example shown in FIG. 2, the marking elements 212 are associated with a navigation application running on the portable electronic device 100. A user may wish to obtain directions to a destination. The destination may be entered, for example, utilizing the touch-sensitive display 118. The portable electronic device 100, when running the navigation application, may determine the location of the portable electronic device 100 and provide directions to the destination. The directions may be provided utilizing the touch-sensitive display 118 and/or the markers 210.

A flowchart illustrating a method of controlling an electronic device, such as the portable electronic device 100, is shown in FIG. 4. The method may be carried out by computer-readable code executed, for example, by the processor 102. Coding of software for carrying out such a method is within the scope of a person of ordinary skill in the art given the present description. The method may contain additional or fewer processes than shown and/or described, and may be performed in a different order.

The method may be carried out in any suitable application that outputs information, for example, an email application, a text messaging application, a calendar application, a tasks application, an address book application, a navigation application, and so forth. An event is detected 402. The event may be, for example, an input that is detected and determined to be a query, such as a query input detected through a navigation device. The event may be an input through a navigation device of the portable electronic device 100. The input may be provided via any suitable input from one or more navigation devices. For example, the navigation device may be the touch-sensitive display 118, a trackpad, a trackball, a scroll wheel, an optical joystick, or any other suitable navigation device. The input may be a gesture on the navigation device, depression of the navigation device, or a force applied to a navigation device, and so forth.

The input may be identified as a query, for example, when the input is associated with a query based on the attributes of the input. For example, attributes for a gesture may be utilized to match the gesture to a query. These attributes may include shape, direction, duration, distance, length, start location, end location, and so forth. Alternatively, a force value that meets a threshold may be matched to a query.

Alternatively, the event may be a phone call, receipt of an email, determination of a position utilizing, for example, a navigation application, time, a period of time, or any other suitable event. The output provided may be caller identification, email sender, time period, and so forth.

A response to the event is obtained 404. The response may be obtained based on information identified by, obtained by, for example, via the network 150, and/or stored in the portable electronic device 100 the portable electronic device 100.

The marker(s) is/are positioned to provide output in response to the event at 406. The output is provided by actuating the actuators 120 to position the markers. After applying the gesture to the portable electronic device 100, the user may place a surface, such as a part of the hand or piece of paper against the markers. The mark is applied by pressure applied by the markers 210 against the surface, by the user pressing the surface against the markers 210, or both.

The markers may remain in position for a predetermined period of time, for example, after the event is detected, or the position of the markers may be maintained until a further event is detected.

For example, the markers may be utilized to provide directions to a destination when a query is detected by the portable electronic device 100, e.g., in circumstances in which a user does not wish to remove the portable electronic device 100 from a location such as a holster, pocket, or purse.

In one example, a destination is entered in a navigation application. The portable electronic device 100 may be placed, for example, in a pocket or purse. When an event is detected, such as reaching a location where a turn is indicated by the navigation application or when the user checks the directions, an output is provided. Input, such as a swipe or other gesture, may be detected utilizing the touch-sensitive display 118 to provide an update or check of directions to the user.

When a gesture is detected on the touch-sensitive display 118, the gesture is identified as a query, based on the gesture attributes, such as start location, direction, distance, duration, shape, finish location, and so forth. When the gesture is determined to be associated with a query, a response, which in this example includes directions, is obtained. The response may be based on the location of the portable electronic device 100 when the event is detected. The response may also be based on the destination location. The response may be obtained based on a short history of movement. For example, when the location of the portable electronic device 100 is determined to be an intersection of roads, a short history of movement may be utilized to determine the direction of travel. Alternatively, the portable electronic device 100 may await further movement to determine the direction of travel. The actuators 120 are actuated to position the markers to provide output in response to the query.

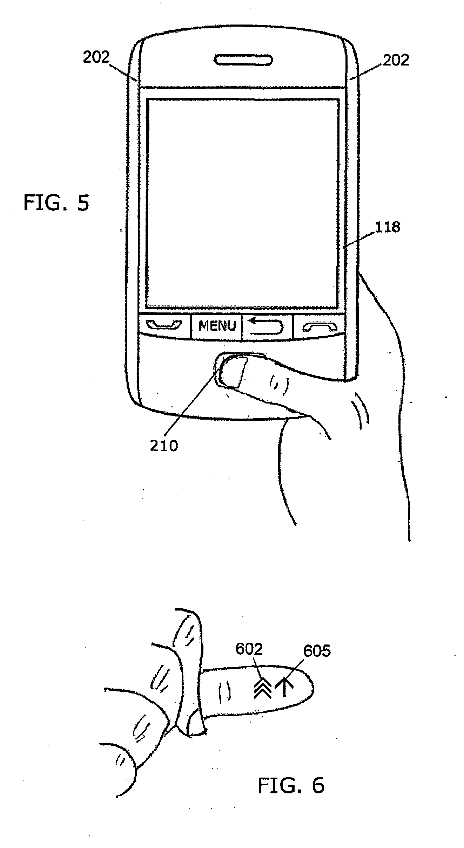

An example of a user placing a thumb on the markers 210 of the portable electronic device 100 is illustrated in FIG. 5, and a mark on the thumb of the user is illustrated in FIG. 6. After applying the gesture to the portable electronic device 100, the user places a thumb on the markers. The markers 210 imprint or indent the surface of the thumb. The user views the thumb to view the directions. In the example shown in FIG. 6, the directions may indicate to the user that the destination is far ahead, as illustrated by the three hash marks 602, and to continue straight, as indicated by the straight arrow 605. Other marking elements may be included, for example to indicate to the user that the destination is near, that the user has arrived, to turn right, turn left, turn around, and so forth.

The marking elements 212 are mirror images of the imprinted directions on the thumb, as illustrated in FIG. 2 and FIG. 5. The indent on the surface, such as a thumb, may be temporary when the surface comprises a viscoelastic material, e.g., a surface that recovers from the indent within a short period of time.

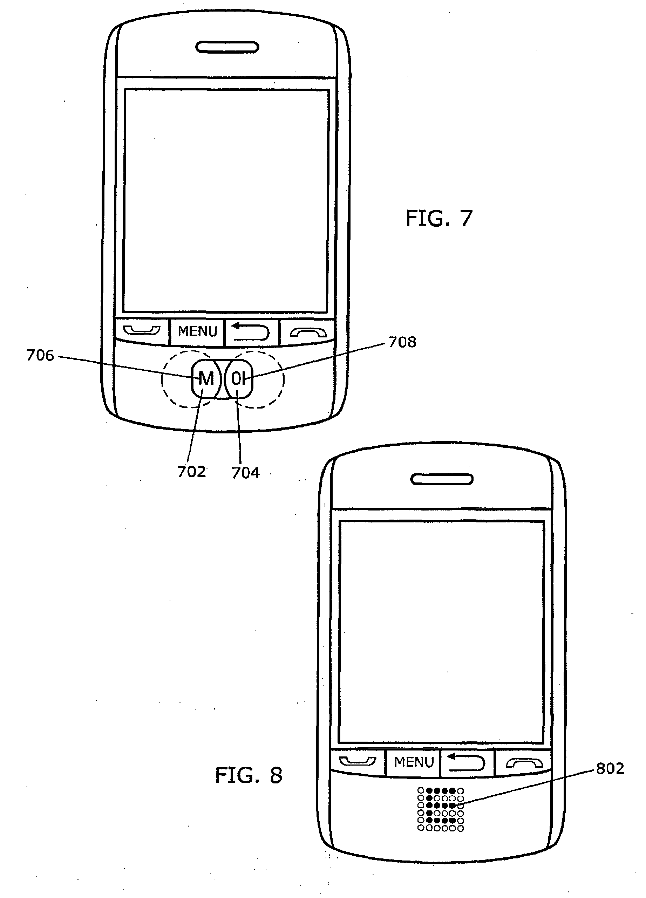

An alternative example of markers of a portable electronic device 100 is illustrated in FIG. 7. In the example illustrated in FIG. 7, two markers 702, 704 in the form of rotating discs are utilized. In this example, a part of each marker 702, 704 is accessible through the opening in the front of the housing. The outline of each marker 702, 704 is illustrated by dashed lines. Each marker includes a plurality of marking elements 706, 708. Two actuators, which may be, for example, miniature stepper motors, are utilized to rotate the markers 702, 704 to provide access to one or more marking elements 706, 708 based on the information requested or the event that initiated the markers 702, 704 to provide information. The marking elements 706, 708 on each disc may be spaced apart such that a single marking element 706, 708 is accessible through the opening in the front of the housing at any one instance in time. Alternatively, the marking element may contain a blank or null element that leaves no impression. The marking elements 706, 708 illustrated in FIG. 7 may be associated with a calendar or clock application on the portable electronic device, for example, to indicate time remaining until a next calendared event or to tell the time of day. The marker 702 may include marking elements indicating units, such as M for minutes, H for hours, and D for days. The marker 704 may include marking elements indicating numbers such as 10, 30, 1, and so forth.

In one example, an event is detected, such as a force imparted on the touch-sensitive display 118. A response may be based on the time when the event is detected and the next scheduled calendared event. The time may be rounded to a nearest number for which a corresponding marking element exists. The marking elements 706, 708 are shown as mirror images of the imprinted time and, in the example shown in FIG. 7, time intervals are 10 minute periods of time.

Another example of markers of a portable electronic device 100 is illustrated in FIG. 8. Markers 802 in the form of pins are located at least partially in one or more holes and are actuated by respective actuators to protrude from each other. In one example, only the markers 802 that provide the information protrude through the holes, and the remaining markers do not protrude through the holes. The markers 802 that provide the information may simply protrude beyond the markers 802 that do not provide the information. In the example illustrated in FIG. 8, 36 markers 802 are utilized in a 6 by 6 matrix of closely spaced pins. Any suitable number or arrangement of markers 802 may be utilized. The markers 802 may be extended for example, by actuating piezoelectric actuators to cause the markers to protrude from the holes. The information provided by the markers 802 may be associated with any suitable application. In the example of FIG. 8, protruding pins are illustrated by solid or black holes. A mirror image of 3 is shown, which may represent a time of 3:00, 3 unread emails, 3 time intervals to a next meeting, and so forth, depending on the application. The detected event may be a circular gesture on the touch-sensitive display 118, which is associated with a query such as the current time or unread emails. Actuators are actuated such that the appropriate markers 802 protrude to mark the "3" on the surface provided.

In the above examples, the event that is detected is an input provided through a user interface. Other events may be detected, such as arrival at or near a location, as determined utilizing the navigation application, passage of a period of time, an incoming phone call or email, or other event that is detected without user interaction or query.

The markers may be utilized to apply a mark by indenting or imprinting a surface. Alternatively, the markers may apply a material such as a liquid, e.g., disappearing ink, water-soluble dye, and so forth to surface that is separate from the portable electronic device. For example, the rotatable markers of FIG. 2 and FIG. 7 may be rotated across an ink pad such that ink is applied to the marking elements, which ink may be transferred to the surface.

Optionally, a cover may extend over the marker and/or the opening in the housing through which the marker is accessible. The cover may be opened by moving the cover, for example, by sliding or rotating the cover. The marker may optionally be a peripheral device to the portable electronic device. The information may appear on the markers as a mirror or reverse image such that the imprint on the surface is readable by a user. The marking elements may be associated with one or more applications. The actuators may be piezoelectric, magnetic, motorized, apd so forth.

The portable electronic device 100 is not limited to the portable electronic device shown and described with reference to FIG. 1. Other portable electronic devices may be utilized. For example, a peripheral device with the markers may communicate with the portable electronic device via short-range communication. The portable electronic device need not include a communication subsystem nor communicate with a network.

Circumstances may arise in which a user may wish to obtain information from,a portable electronic device without retrieving the device and viewing. In such circumstances, viewing an electronic device may be considered rude, interruptive, or may be unsafe. The portable electronic device applies or transfers a mark to an external surface, such as part of a hand or an inanimate object, facilitates output of information without the need for the user to look at the device or remove it from a holster, pocket, or other storage location.

The present disclosure may be embodied in other specific forms without departing from its scope as defined by the claims. The described embodiments are to be considered in all respects only as illustrative and not restrictive. The scope of the present disclosure is, therefore, indicated by the appended claims.

## Claims

1. A portable electronic device (100) comprising:
a device configured to detect an event;
a marker (210, 702, 704, 802) configured to mark a surface that is separate from the portable electronic device (100) by temporarily indenting the surface, **characterized in that** the marker (210, 702, 704, 802) comprises a rotary element;
at least one actuator (120) arranged to rotate the rotary element to apply the mark in response to the event.

2. The portable electronic device (100) according to claim 1, wherein the device comprises at least one of a touch-sensitive display (118), a trackpad, a trackball, a scroll wheel, and an optical joystick.

3. The portable electronic device (100) according to claim 1, wherein the mark comprises information relating to an application on the portable electronic device (100).

4. The portable electronic device (100) according to claim 1, wherein the mark is applied to the surface of a viscoelastic material.

5. The portable electronic device (100) according to claim 1, wherein the mark comprises an ink mark.

6. The portable electronic device (100) according to claim 1, wherein the marker (210, 702, 704, 802) is arranged to mark skin of a user.

7. The portable electronic device (100) according to claim 1, wherein the marker (210, 702, 704, 802) includes a mirror image of the mark.

8. The portable electronic device (100) according to claim 1, wherein the event comprises a query.

9. The portable electronic device (100) according to claim 1, wherein the event comprises a gesture.

10. The portable electronic device (100) according to claim 1, wherein the device comprises a force sensor (122) and the event comprises a force imparted on the force sensor (122).

11. The portable electronic device (100) according to claim 1, wherein the rotary element includes a plurality of marking elements (212, 706, 708).

12. The portable electronic device (100) according to claim 11, wherein the marking elements (706, 708) form symbols.

13. The portable electronic device according to claim 11, wherein the actuator (120) positions at least one marking element (212, 706, 708) of the marker (702, 704).

14. The portable electronic device (100) according to claim 1, wherein the marker (210, 702, 704, 802) comprises a plurality of movable pins that protrude to form a shape on the surface.

15. The portable electronic device (100) according to claim 14, wherein the at least one actuator (120) comprises a plurality of piezoelectric actuators.

16. A method comprising:
detecting an event on a device of a portable electronic device (100);
determining a response to the event;
actuating one or more actuators (120) to configure a marker (210, 702, 704, 802) to apply a mark to a surface that is separate from the portable electronic device (100) based on the response by temporarily indenting the surface, **characterized in that** the marker (210, 702, 704, 802) comprises a rotary element, and the one or more actuators (120) actuators are arranged to rotate the rotary element.

17. The method according to claim 16, further wherein detecting the event comprises detecting a gesture on the device of the portable electronic device (100) and identifying the gesture as the query.

18. The method according to claim 16, wherein detecting comprises detecting an imparted force on the device and determining that the force meets a threshold.

19. The method according to claim 16, wherein determining the response comprises determining which of the one or more actuators (120) to actuate.

20. The method according to claim 16, wherein the one or more actuators (120) move a plurality of pins, and actuating a first actuator comprises causing one of the plurality of pins to protrude.

21. The method according to claim 16, wherein the mark is applied to the surface of a viscoelastic material.

## Patentansprüche

1. Tragbare elektronische Vorrichtung (100), die aufweist:
eine Vorrichtung, die konfiguriert ist zum Erfassen eines Ereignisses; einen Markierer (210, 702, 704, 802), der konfiguriert ist zum Markieren einer Oberfläche, die von der tragbaren elektronischen Vorrichtung (100) getrennt ist, durch vorübergehendes Eindrücken der Oberfläche, **dadurch gekennzeichnet, dass** der Markierer (210, 702, 704, 802) ein Rotationselement aufweist;
zumindest einen Aktuator (120), der ausgebildet ist zum Rotieren des Rotationselements, um die Markierung in Reaktion auf das Ereignis anzuwenden.

2. Die tragbare elektronische Vorrichtung (100) gemäß Anspruch 1, wobei die Vorrichtung zumindest eines aus einer berührungsempfindlichen Anzeige (118), einem Trackpad, einem Trackball, einem Scrollrad und einem optischen Joystick aufweist.

3. Die tragbare elektronische Vorrichtung (100) gemäß Anspruch 1, wobei die Markierung Information in Bezug auf eine Anwendung auf der tragbaren elektronischen Vorrichtung (100) aufweist.

4. Die tragbare elektronische Vorrichtung (100) gemäß Anspruch 1, wobei die Markierung auf die Oberfläche eines viskoelastischen Materials angewendet wird.

5. Die tragbare elektronische Vorrichtung (100) gemäß Anspruch 1, wobei die Markierung eine Tintenmarkierung aufweist.

6. Die tragbare elektronische Vorrichtung (100) gemäß Anspruch 1, wobei der Markierer (210, 702, 704, 802) ausgebildet ist zum Markieren der Haut eines Benutzers.

7. Die tragbare elektronische Vorrichtung (100) gemäß Anspruch 1, wobei der Markierer (210, 702, 704, 802) ein Spiegelbild der Markierung umfasst.

8. Die tragbare elektronische Vorrichtung (100) gemäß Anspruch 1, wobei das Ereignis eine Abfrage aufweist.

9. Die tragbare elektronische Vorrichtung (100) gemäß Anspruch 1, wobei das Ereignis eine Geste aufweist.

10. Die tragbare elektronische Vorrichtung (100) gemäß Anspruch 1, wobei die Vorrichtung einen Kraftsensor (122) aufweist und das Ereignis eine Kraft aufweist, die auf den Kraftsensor (122) ausgeübt wird.

11. Die tragbare elektronische Vorrichtung (100) gemäß Anspruch 1, wobei das Rotationselement eine Vielzahl von Markierungselementen (212, 706, 708) umfasst.

12. Die tragbare elektronische Vorrichtung (100) gemäß Anspruch 11, wobei die Markierungselemente (706, 708) Symbole bilden.

13. Die tragbare elektronische Vorrichtung (100) gemäß Anspruch 11, wobei der Aktuator (120) zumindest ein Markierungselement (212, 706, 708) des Markierers (702, 704) positioniert.

14. Die tragbare elektronische Vorrichtung (100) gemäß Anspruch 1, wobei der Markierer (210, 702, 704, 802) eine Vielzahl von bewegbaren Stiften aufweist, die hervorragen, um eine Form auf der Oberfläche zu bilden.

15. Die tragbare elektronische Vorrichtung (100) gemäß Anspruch 14, wobei der zumindest eine Aktuator (120) eine Vielzahl von piezoelektrischen Aktuatoren aufweist.

16. Ein Verfahren, das aufweist:
Erfassen eines Ereignisses an einer Vorrichtung einer tragbaren elektronischen Vorrichtung (100);
Bestimmen einer Reaktion auf das Ereignis;
Betätigen eines Aktuators oder mehrerer Aktuatoren (120), um einen Markierer (210, 702, 704, 802) zu konfigurieren zum Anwenden einer Markierung auf einer Oberfläche, die von der tragbaren elektronischen Vorrichtung (100) getrennt ist, basierend auf der Reaktion, durch vorübergehendes Eindrücken der Oberfläche, **dadurch gekennzeichnet, dass** der Markierer (210, 702, 704, 802) ein Rotationselement aufweist, und der eine oder mehrere Aktuator(en) (120) ausgebildet ist/sind zum Rotieren des Rotationselements.

17. Das Verfahren gemäß Anspruch 16, wobei weiter das Erfassen des Ereignisses ein Erfassen einer Geste auf der Vorrichtung der tragbaren elektronischen Vorrichtung (100) und Identifizieren der Geste als die Abfrage aufweist.

18. Das Verfahren gemäß Anspruch 16, wobei das Erfassen aufweist ein Erfassen einer ausgeübten Kraft auf die Vorrichtung und Bestimmen, dass die Kraft eine Schwelle erreicht.

19. Das Verfahren gemäß Anspruch 16, wobei das Bestimmen der Reaktion ein Bestimmen aufweist, welcher des einen Aktuators oder der mehreren Aktuatoren (120) zu betätigen ist.

20. Das Verfahren gemäß Anspruch 16, wobei der eine oder mehrere Aktuator(en) (120) eine Vielzahl von Stiften bewegt/bewegen, und eine Betätigung eines ersten Aktuators ein Veranlassen eines der Vielzahl von Stiften zum Hervorragen aufweist.

21. Das Verfahren gemäß Anspruch 16, wobei die Markierung auf die Oberfläche eines viskoelastischen Materials angewendet wird.

## Revendications

1. Dispositif électronique portable (100) comprenant :
un dispositif configuré pour détecter un événement ;
un marqueur (210, 702, 704, 802) configuré pour marquer une surface qui est séparée du dispositif électronique portable (100) par enfoncement temporaire de la surface, **caractérisé en ce que** le marqueur (210, 702, 704, 802) comprend un élément rotatif ;
au moins un actionneur (120) agencé pour faire tourner l'élément rotatif pour appliquer la marque en réponse à l'événement.

2. Dispositif électronique portable (100) selon la revendication 1, dans lequel le dispositif comprend au moins l'un(e) d'un écran tactile (118), d'un pavé tactile, d'une boule de commande, d'une molette de défilement, et d'une manette de jeu optique.

3. Dispositif électronique portable (100) selon la revendication 1, dans lequel la marque comprend des informations relatives à une application sur le dispositif électronique portable (100).

4. Dispositif électronique portable (100) selon la revendication 1, dans lequel la marque est appliquée sur la surface d'un matériau viscoélastique.

5. Dispositif électronique portable (100) selon la revendication 1, dans lequel la marque comprend une marque d'encre.

6. Dispositif électronique portable (100) selon la revendication 1, dans lequel le marqueur (210, 702, 704, 802) est agencé pour marquer la peau d'un utilisateur.

7. Dispositif électronique portable (100) selon la revendication 1, dans lequel le marqueur (210, 702, 704, 802) comporte une image inverse de la marque.

8. Dispositif électronique portable (100) selon la revendication 1, dans lequel l'événement comprend une requête.

9. Dispositif électronique portable (100) selon la revendication 1, dans lequel l'événement comprend un geste.

10. Dispositif électronique portable (100) selon la revendication 1, dans lequel le dispositif comprend un capteur de force (122) et l'événement comprend une force appliquée sur le capteur de force (122).

11. Dispositif électronique portable (100) selon la revendication 1, dans lequel l'élément rotatif comporte une pluralité d'éléments de marquage (212, 706, 708).

12. Dispositif électronique portable (100) selon la revendication 11, dans lequel les éléments de marquage (706, 708) forment des symboles.

13. Dispositif électronique portable selon la revendication 11, dans lequel l'actionneur (120) positionne au moins un élément de marquage (212, 706, 708) du marqueur (702, 704).

14. Dispositif électronique portable (100) selon la revendication 1, dans lequel le marqueur (210, 702, 704, 802) comprend une pluralité de broches mobiles qui font saillie de façon à former une forme sur la surface.

15. Dispositif électronique portable (100) selon la revendication 14, dans lequel l'au moins un actionneur (120) comprend une pluralité d'actionneurs piézoélectriques.

16. Procédé comprenant le fait :
de détecter un événement sur un dispositif d'un dispositif électronique portable (100) ;
de déterminer une réponse à l'événement ;
d'actionner un ou plusieurs actionneur(s) (120) pour configurer un marqueur (210, 702, 704, 802) afin d'appliquer une marque sur une surface qui est séparée du dispositif électronique portable (100) sur la base de la réponse par enfoncement temporaire de la surface, **caractérisé en ce que** le marqueur (210, 702, 704, 802) comprend un élément rotatif, et le ou les plusieurs actionneur(s) (120) est/sont agencé(s) pour faire tourner l'élément rotatif.

17. Procédé selon la revendication 16, dans lequel, en outre, la détection de l'événement comprend la détection d'un geste sur le dispositif du dispositif électronique portable (100) et l'identification du geste comme étant la requête.

18. Procédé selon la revendication 16, dans lequel la détection comprend le fait de détecter une force appliquée sur le dispositif et de déterminer que la force atteint un seuil.

19. Procédé selon la revendication 16, dans lequel la détermination de la réponse comprend le fait de déterminer l'actionneur parmi le ou les plusieurs actionneur(s) (120) à actionner.

20. Procédé selon la revendication 16, dans lequel le ou les plusieurs actionneur(s) (120) déplacent une pluralité de broches, et l'actionnement d'un premier actionneur comprend le fait d'amener l'une de la pluralité de broches à faire saillie.

21. Procédé selon la revendication 16, dans lequel la marque est appliquée sur la surface d'un matériau viscoélastique.
